# EUROPÄISCHE PATENTSCHRIFT

(11) **EP 2 032 661 B1**
(45) Veröffentlichungstag und Bekanntmachung des Hinweises auf die Patenterteilung: **28.12.2011**
(21) Anmeldenummer: 07730042.4
(22) Anmeldetag: 11.06.2007
(51) Int. Cl.: C09C 1/36

(54) **PIGMENT UND DAMIT MATTIERTE POLYMERE WERKSTOFFE**
PIGMENT AND POLYMERIC MATERIALS MATTED THEREWITH
PIGMENT ET MATÉRIAU POLYMÈRE MATIFIÉ AVEC CE PIGMENT

(30) Priorität: 09.06.2006 DE 102006027249
(43) Veröffentlichungstag der Anmeldung: 11.03.2009
(73) Patentinhaber: Sachtleben Chemie GmbH, 47198 Duisburg (DE)
(72) Erfinder: KASTNER, Jürgen, 44803 Bochum (DE); WAGNER, Hartmut, 47441 Moers (DE); BECKER, Bernhard, 47809 Krefeld (DE)
(74) Vertreter: Uppena, Franz
(86) Internationale Anmeldenummer: PCT/EP2007/055695
(87) Internationale Veröffentlichungsnummer: WO 2007/141342

(56) Entgegenhaltungen:
- WO-A-94/22962
- WO-A-03/055949
- US-A- 3 505 088
- US-A- 4 710 535
- US-B1- 6 437 088

## Beschreibung

Gegenstand der Erfindung ist ein Pigment, dessen Herstellung und Verwendung, weiterhin ein polymerer, mit Pigmenten mattierter Werkstoff, Verfahren zur Herstellung und die Verwendung dieses polymeren Werkstoffs.

Mattierte Synthesefasern sind polymere Werkstoffe, die, zur Erzielung einer gewünschten Mattierungswirkung zwischen 0,03 und 3 Ges.-% eines anorganischen Feststoffes, vorzugsweise TiO₂ (Titandioxid), enthalten. Ein Grund ist, dass Polymerschmelzen mehr oder weniger transparent sind, weil der homogene Aufbau der synthetischen Polymere dem Licht keine Möglichkeit zur Brechung oder diffusen Reflexion bietet. Der Zusatz von TiO₂ führt bekanntlich zu einer Minderung des speckigen Glanzes bzw. der Transparenz der Synthesefasern sowie zu einer Oberflächenstruktur, die eine Verbesserung der Laufeigenschaften der Synthesefasern im weiteren Verarbeitungsprozess ermöglicht.

Hohe TiO₂-GehaRe (1,5 bis 3 Gew.-% TiO₂) in Synthesefasern führen zu einer besonders ausgeprägten Mattierungswirkung, die sich sowohl visuell als auch haptisch (textiler Griff) wahrnehmen lässt. Diese Gestaltung von Synthesefasern ist oftmals erwünscht, um den Synthesefasern ein stark baumwollähnliches Erscheinungsbild (cotton-like) zu verleihen. Zudem weisen aus derart gestalteten Full Dull-Fasern hergestellte textile Flächen eine besonders hohe Undurchlässigkeit für UV-Strahlung auf.

Neben ihrem Einfluss auf Glanz und Transparenz von Synthesefasern beeinflussen TiO₂-Pigmente auch andere Herstellungs- und Produkteigenschaften von Synthesefasern in mannigfacher Art. Die Anforderungen an die Pigmente variieren mit den verschiedenen Polymertypen, Verfahren und Faserqualitäten. Die Oberflächen- und Pigmenteigenschaften können durch Maßnahmen wie den Einbau von Fremdionen ins TiO₂-Gitter, Aufbringen einer anorganischen und/oder organischen Nachbehandlung verändert werden. Durch die richtige Kombination der Maßnahmen lässt sich ein spezielles Pigment für jedes Polymer optimieren. Insbesondere die Dispergierbarkeit in Anwendungsmedien wie beispielsweise Ethandlol, Wasser oder auch Polymerschmelzen und die nachfolgende Pigmentverteilung in der Faser ist auf diese Weise positiv beeinflussbar.

Neben den physikalischen und chemischen Eigenschaften der Synthesefasern spielen bei der Qualitätsbewertung der Synthesefasern auch die optischen Eigenschaften eine bedeutende Rolle. Insbesondere sind hier die Eigenschaften Opazität und Farbeindruck bezüglich der Farbe Weiß zu nennen. Die meisten Hersteller von Synthesefasern bevorzugen heute ein blaustichiges Weiß als Farbton für ihre Produkte. Dieser Farbton der Fasern wird von den farbmetrischen Eigenschaften des Pigmentes, von der Verteilung des Pigmentes in der Faser und von den chemischen Wechselwirkungen der Pigmentobertlächen mit dem umgebenden Polymer unter den jeweiligen Bedingungen zur Herstellung der entsprechenden Synthesefaser (beispielsweise Temperatur und Druck) beeinflusst.

Das von der Mehrzahl der Faserhersteller bevorzugte blaustichige Weiß als Farbton wird nach dem heutigen Stand der Technik nur bedingt bzw. unzureichend verfüllt So treten trotz Verwendung von farbmetrisch geeigneten TiO₂-Pigmenten (mit blaustichigem Weiß) während des Einsatzes bei der Herstellung und Verarbeitung der Polymere unerwünschte Reaktionen statt, die den Farbton der Synthesefaser in den gelbstichigen Bereich verschieben.

Im Dokument US6437088 wird Ti0₂ (Anatas oder Rutil) beschichtet mit zumindest SiO₂, Al₂0₃, Sb₂0₃, P₂0₅ und/oder MnO zur Verwendung als Mattierunasadditiv in der Polvesterproduktion beschrieben. Die Beschichtung kann weiterhin 0,01-5% Polyethylenoxid, Trimethylolpropan oder andere umfassen. Das Pigment wird als Mattierungsadditiv in einer Konzentration von 0,3 bis 1,5% z.B. in Fasern verwendet. Der Extinktionswert des enannten Pigments ist in US6437088 nicht explizit offenbart.

Dokument US3505088 beschreibt ein verbessertes Ti0₂ zur Verwendung als Mattierungsadditiv in Polyamidfasern, Im Beispiel 1 wird ein Anatas-Ti0₂-Pigment das nachbehandelt wird mit Si0₂, Al₂0₃ und Mn(II)-phosphat offenbare. In den Beispielen der mattierten polymeren Werkstoffe werden 0.3% bzw. 1.8% des Mattierungspigments zugesetzt.

Dokument W094/22962 beschreibt Ti0₂ beschichtet mit einer Kombination von Si0₂, Al₂0₃, Mn und Phosphat, und weiter beschichtet Di(n-octyl)azelat. Das Pigment wird als Mattierungsadditiv z.B. in synthetischen Nylonfasern verwendet, in Beispiel 4 werden 1,6% des Ti0₂-Pigments eingesetzt.

Dokument US471 0535 beschreibt ein Anatas-Ti0₂-Pigment, das mit 0.01-1.5% Si0₂, 1-3% Al₂0₃, 0,1-0,3% Mn und 1-5% Polydimethylsiloxanöl beschichtet ist. Es dient als Mattierunasadditiv bei der Herstefiungl von Polyamidfasern, -filmen und -folgen und wird als Masterbatch eingesetzt. Der Pigmentgehalt im Produkt beträgt beispielsweise 1,7%,

Auch Dokument W0031055949 (D5) beschreibt Anatas- oder Rutil-Ti0₂ mit einer Beschichtung aus Al-Phosphat und einem Extinktionskoeffizienten bei 450 nm (E450) von vorzugsweise 0.7 bis 1.0. Allerdings wird dadurch nicht der erfindungsgemäß gewünschte Effekt erreicht.

Aufgabe der vorliegenden Erfindung war es, die Nachteile des Standes der Technik zu überwinden. Insbesondere war es Aufgabe der vorliegenden Erfindung, geeignete TiO₂-Pigmente bereitzustellen, die bei ihrem Einsatz bei der Herstellung und Verarbeitung von Polymeren keine oder nur wenige unerwünschte Reaktionen auslösen, die die üblicherweise durch die für die Mattierung notwendigen hohen TiO₂-Gehalte bewirkten, unerwünschte Reaktionen, die die unerwünschten Farbtonverschiebungen bei der Herstellung der polymeren Werkstoffe verursachen, es war Aufgabe der vorliegenden Erfindung, TiO₂-Pigmente, die bei der Herstellung und Verarbeitung von Polymeren den gewünschten blaustichigen Farbton und/oder vorzugsweise eine hohe Lichtbeständigkeit erzeugen, bereitzustellen.

Aufgabe der vorliegenden Erfindung war es weiterhin, polymere, mit Pigmenten mattierte Werkstoffe bereitzustellen, die die, bei der Herstellung der polymeren Werkstoffe, üblicherweise durch die für die Mattierung notwendigen TiO₂-Gehalte bewirkten unerwünschten Farbtonverschiebungen nicht bzw. verringert aufweisen, polymere, mit Pigmenten mattierte Werkstoffe, die durch den gewünschten blaustichigen Farbton gekennzeichnet sind und vorzugsweise eine hohe Lichtbeständigkeit aufweisen.

Erfindungsgemäß werden die Aufgaben im Hinblick auf die geeigneten TiO₂-Pigmente überraschenderweise durch TiO₂-Pigmente mit den Merkmalen des Hauptanspruchs gelöst. Vorzugsweise Ausgestaltungen sind in den vom Hauptanspruch abhängigen Unteransprüchen charakterisiert.

Im Hinblick auf die polymeren, mit Pigmenten mattierten Werkstoffe werden die Aufgaben erfindungsgemäß überraschenderweise durch polymere, mit Pigmenten mattierte Werkstoffe mit den Merkmalen des Nebenanspruchs 21 gelöst. Vorzugsweise Ausgestaltungen sind in den vom Nebenanspruch abhängigen Unteransprüchen charakterisiert.

Es wurde überraschenderweise gefunden, dass zum Erzielen der charakteristischen optischen Eigenschaften in Bezug auf Blaustichigkeit des polymeren, mit Pigmenten mattierten Werkstoffs nicht nur die farbmetrischen Eigenschaften des Pigmentes eingestellt werden müssen, sondern dass gleichzeitig Gegenmaßnahmen getroffen werden müssen, um eine Farbtonverschiebung während der Polymerherstellung zu vermeiden.

Bei einem reinweißen Stoff wird praktisch die gesamte einfallende Strahlung zu 100% direkt oder diffus reflektiert, das heißt remittiert. Dieser Idealzustand (ideales Weiß mit Remissionsgrad 100%) ist aber in der Praxis nicht zu erreichen, denn das erreichbare Weiß hat eine, wenn auch sehr geringe, Absorption über das gesamte Spektrum. Bei TiO₂ wird die Remission auch durch die Lage der Absorptionskante beeinflusst. Diese Absorptionskante liegt im UV-Bereich, beginnt aber schon im sichtbaren Bereich. TiO₂-Rutile sind dabei gegenüber TiO₂-Anatas-Pigmenten gelbstichiger, da sie im "blauen" Wellenlängenbereich stärker absorbieren und dadurch ihr remittiertes Licht einen höheren Anteil Gelb enthält, das heißt die Absorptionskante von Anatas liegt gegenüber der von Rutil in den kürzerwelligen Bereich verschoben. Zusätzlich dazu zeigen Weißpigmente auch selektive Absorptionen im kurzwelligen sichtbaren Wellenlängenbereich, was in einem mehr oder weniger leichten Farbstich (Gelbstich) resultiert. Diese selektiven Absorptionen können ihre Ursache in Verunreinigungen der Weißpigmente durch Fremdionen wie beispielsweise Eisen-, Chrom-, Kupfer- bzw. Vanadium-lonen haben. Zur Einstellung der erfindungsgemäß gewünschten optischen Eigenschaften der Pigmente wird daher bevorzugt TiO₂ in der Anatas-Modifikation eingesetzt. Dieses ist besonders arm an Fremdionen, die sonst zu den beschriebenen selektiven Absorptionen im kurzwelligen Bereich des sichtbaren Spektrums führen würden.

Des Weiteren führt insbesondere der Anteil an Feinstpartikeln im TiO₂ auf Grund von höherer Remission im kurzwelligen sichtbaren Bereich zu einem verstärkten Blaustich. Je höher dieser Anteil wird, desto höher ist auch die gemessene Extinktion (Filter Hg 492 nm, 20 mm Küvette) einer wässrigen TiO₂-Suspension (25 mg/l). Die erfindungsgemäß einsetzbaren TiO₂-Pigmente sind daher durch eine spezielle Kornverteilung zur Einstellung der farbmetrischen Eigenschaften des Pigmentes gekennzeichnet, ausgedrückt durch den Extinktionswert. Zur Einstellung der geeigneten farbmetrischen Eigenschaften des Pigmentes wird erfindungsgemäß eine Extinktion im Bereich von 0,9 bis 1,2, bevorzugt im Bereich von 0,95 bis 1,1, besonders bevorzugt im Bereich von 1,0 bis 1,05 eingestellt. Ein derartig erfindungsgemäß aufbereitetes Pigment beeinflusst überraschenderweise andere Pulvereigenschaften, beispielsweise Opazität und Streuvermögen nicht negativ. Die geeignete Extinktion des TiO₂ kann erfindungsgemäß beispielsweise durch optimierte Kristallwachstumsprozesse (beeinflusst und eingestellt durch die Verfahrensschritte Hydrolyse, Glühsalzbehandlung und/oder Kalzination), durch Mahlung (Trocken- oder Nassmahlung) und/oder durch Klassierung (beispielsweise Siebung oder Sichtung) erreicht werden.

Überraschend wurde gefunden, dass die erfindungsgemäß gewünschte Eignung des erfindungsgemäßen TiO₂-Pigments zur Erzielung der gewünschten Blaustichigkeit im mattierten polymeren Werkstoff durch die Zugabe von Antimonionen weiter verbessert werden kann. Erfindungsgemäß bevorzugt ist ein Gehalt an Antimonionen von 0,05 bis 1 Gew.-%, vorzugsweise von 0,1 bis 0,5 Gew.-%, besonders bevorzugt von 0,25 bis 0,4 Gew.-%. Erfindungsgemäß besonders bevorzugt ist es, wenn im Pigment mindestens 50%, bevorzugt mehr als 70%, besonders bevorzugt mehr als 90% der Antimonionen in der fünfwertigen Oxidationsstufe vorliegen.

Mit Hilfe dieses erfindungsgemäß aufbereiteten TiO₂-Pigments lässt sich im mattierten polymeren Werkstoff die gewünschte Blaustichigkeit erzielen, wobei durch den Gehalt an Antimonionen erreicht wird, dass die optischen Pulverdaten (Farbstich) des Pigmentes auch im fertigen polymeren Werkstoff erhalten bleiben und nicht durch farbschädigende Reaktionen in der Polymerherstellung verändert werden; die Antimonionen dienen quasi als "Konservierung". Die Zugabe des Antimons kann in Form eines Antimonsalzes bzw. einer oxidischen Antimonverbindung in allen Verfahrensstufen der TiO₂-Herstellung erfolgen.

Zur Verbesserung der Einarbeitbarkeit in die verschiedenen Polymersysteme und/oder zur Steigerung der Lichtbeständigkeit der TiO₂-enthaltenden polymeren Werkstoffe können die erfindungsgemäßen TiO₂-Pigmente weiterhin durch eine anorganische und/oder organische Oberflächenbehandlung modifiziert sein. Zur anorganischen Oberflächenbehandlung des TiO₂ finden erfindungsgemäß die Oxide und/oder Hydroxide des Aluminiums (Al), des Siliziums (Si), des Zirkons (Zr), des Mangans (Mn), aber auch des Titans (Ti) Verwendung. Anorganische Nachbehandlungen müssen erfindungsgemäß nicht unbedingt nur oxidischer Natur sein, sondern können auch andere Anionen enthalten. Beispielsweise bilden Aluminium, Titan und Mangan schwer lösliche Phosphate, die sich ebenfalls an die Pigmentoberfläche anlagern. Der erfindungsgemäßen Oberflächenbehandlung liegt das Prinzip zu Grunde, dass eine wässrige Dispersion eines aufgemahlenen TiO₂-Materials vorgelegt und die aufzufällende Verbindung in zunächst gelöster Form zugegeben wird. Durch gezielte Änderung des pH-Wertes (beispielsweise durch Zugabe von Natronlauge, Schwefelsäure oder Phosphorsäure) wird die gewünschte anorganische Substanz auf dem TiO₂-Grundmaterial aufgefällt. So lassen sich erfindungsgemäß die TiO₂-Partikel mit einer Schicht oder mehreren Schichten anorganischer Substanzen belegen. Die Oberflächenbehandlung kann erfindungsgemäß dabei nacheinander aber auch gleichzeitig erfolgen. Zur Erzielung der erfindungsgemäß gewünschten Lichtbeständigkeit enthält die anorganische Nachbehandlung bevorzugt eine Kombination aus Verbindungen des Aluminiums, des Siliziums und des Mangans, besonders bevorzugt 0,2 bis 1,0% Al, 0 bis 1,0% Si und 0,05 bis 0,8% Mn. Die Nachbehandlungsmengen werden üblicherweise als Gewichtsprozent des Kations, bezogen auf das eingesetzte TiO₂-Grundmaterial, angegeben, beispielsweise 0,5% Aluminium. Erfindungsgemäß besonders bevorzugt ist es, wenn das Mangan zu mehr als 5% in der Oxidationsstufe +2, besonders bevorzugt zu mehr als 10% in der Oxidationsstufe +2 vorliegt.

Um die anorganisch oberflächenbehandelten TiO₂-Pigmente noch besser in die verschiedenen Anwendungsmedien (beispielsweise Wasser, Ethandiol, Propandiol Polyamidschmelzen oder Polyesterschmelzen) einarbeiten zu können, können erfindungsgemäß die TiO₂-Pigmente zusätzlich mit mindestens einer organischen Substanz modifiziert werden (organische Oberflächenbehandlung). Bevorzugt enthält die organische Oberflächenbehandlung einen oder mehreren der folgenden Substanzen: Polyglykole (beispielsweise Poylethylenglykole bzw. Polypropylenglykole oder auch Copolymere daraus), Carbonsäuren, Alkalisalze von Carbonsäuren, mehrwertige Alkohole (beispielsweise Trimethylolpropan, Trimethylolethan, Pentaerythrit oder Neopentylgykol), Silane, Siloxane und Siloxan-Derivate, Siliconöle, Alkalisalze von Polyphosphaten, Aminoalkohole, Salze von Poly(meth)acrylsäure oder Poly(meth)acrylatcopolymere (beispielsweise Natrium-, Kalium- oder Ammoniumpolyacrylate). Die Zugabemenge der organischen Oberflächenbehandlungsmittel (Gesamtmenge) liegt bevorzugt zwischen 0,01 bis 8 Gew.-%, besonders bevorzugt zwischen 0,05 bis 4 Gew.-% und ganz besonders bevorzugt zwischen 0,1 bis 1,5°Gew.-%.

Die Zugabe der organischen Oberflächenbehandlungsmittel kann erfindungsgemäß in allen Verfahrensstufen nach Aufbringung der anorganischen Oberflächenbehandlung bzw. bei anorganisch nicht oberflächenbehandelten TiO₂-Pigmente in allen Verfahrensstufen nach der Kalzination zugegeben werden.

Der polymere Werkstoff enthält bevorzugt Polyester (wie Polyethylenterephthalat (PET), Polytrimethylenterephthalat (PTT), Polylactid (PLA)), Polyamide (wie PA-6 oder PA-6,6), Polyolefine (wie Polyethylen (PE) oder Polypropylen (PP)), Polyacrylnitrile (PAN), Viskose (CV) oder Zelluloseacetat (CA).

Die Form des erfindungsgemäßen polymeren Werkstoffes ist nicht auf eine bestimmte Ausführung beschränkt. Bevorzugt liegt der erfindungsgemäße polymere Werkstoff in Form von Synthesefasern (wie Filamente, Stapel- oder Flockfasern) vor. Der polymere Werkstoff kann erfindungsgemäß auch in Form von Filmen, Folien oder Formteilen vorliegen.

Erfindungsgemäß bevorzugt liegt der TiO₂-Gehalt im polymeren Werkstoff im Bereich von 0,02 bis 10 Gew.-%. Beim Anwendungsgebiet Synthesefasern liegt der TiO₂-Gehalt erfindungsgemäß bevorzugt bei 0,1 bis 3 Gew.-%, besonders bevorzugt bei 1,5 bis 2,7°Gew.-% und ganz besonders bevorzugt bei 0,15 bis 0,4 Gew.-%. Beim Anwendungsgebiet polymerer Film liegt der TiO₂-Gehalt erfindungsgemäß besonders bevorzugt im Bereich von 0,1 bis 8 Gew.-% und ganz besonders bevorzugt bei 0,4 bis 5 Gew.-%.

Hergestellt werden können die erfindungsgemäßen polymeren Werkstoffe, indem anstatt des bisher gebräuchlichen Additivs TiO₂ das erfindungsgemäße TiO₂-Pigment eingesetzt wird. Die Zugabe dieses TiO₂-Pigments kann erfindungsgemäß in bekannter Weise vor, während und/oder nach der Polymerisationsreaktion erfolgen. Das erfindungsgemäße TiO₂-Pigment wird dem Polymerherstellprozess bevorzugt als ausdispergierte Suspension in Wasser (für PA) oder in Ethandiol (für PET) zugegeben. Die Zugabe zum Polymerstrom als so genannter Masterbatch oder als in der Schmelze leicht zu verteilende Präparation erfolgt zweckmäßigerweise dann, wenn der Polymerprozess keine Zugabe während der Polymerisation erlaubt (beispielsweise bei PE oder PP) oder gezielt erwünscht ist, wie z.B. beim Melt Conditioning Verfahren bzw. Direktmattierungsverfahren (beispielsweise bei PET oder PA-6).

Verwendung findet der erfindungsgemäße polymere Werkstoff beispielsweise bei der Herstellung von textilen Flächen, wie beispielsweise für Bekleidungs- oder Heimtextilien. Eine weitere Verwendung findet der erfindungsgemäße polymere Werkstoff beispielsweise bei der Herstellung von polymeren Filmen und Folien (beispielsweise für Verpackungs- oder Druckanwendungen).

Gegenstand der Erfindung ist im Einzelnen:
- ein TiO₂-Pigment;
- ein TiO₂-Pigment, das in der Anatas-Modifikation vorliegt;
- ein TiO₂-Pigment, das in der Anatas-Modifikation vorliegt und durch eine spezielle Kornverteilung zur Einstellung der farbmetrischen Eigenschaften des Pigmentes gekennzeichnet ist, ausgedrückt durch den Extinktionswert, wobei
   ➢ der Extinktionswert im Bereich von 0,9 bis 1,2, bevorzugt im Bereich von 0,95 bis 1,1, besonders bevorzugt im Bereich von 1,0 bis 1,05 liegt;
- ein wie oben beschriebenes TiO₂-Pigment, das weiterhin Antimonionen enthält, wobei
   ➢ der Gehalt an Antimonionen 0,05 bis 1 Gew.-°%, bevorzugt 0,1 bis 0,5 Ges.-%, besonders bevorzugt 0,25 bis 0,4 Gew.-% beträgt
   ➢ die Antimonionen zu mindestens 50%, bevorzugt zu mehr als 70%, besonders bevorzugt zu mehr als 90% in der fünfwertigen Oxidationsstufe vorliegen
- ein wie oben beschriebenes TiO₂-Pigment, das weiterhin einer anorganischen Oberflächenbehandlung unterzogen wurde, wobei
   ○ die TiO₂-Partikel mit einer Schicht oder mehreren Schichten anorganischer und/oder organischen Substanzen belegt werden, wobei
   ○ als anorganische Substanzen Verbindungen des Aluminiums (Al), des Siliziums (Si), des Zirkons (Zr), des Mangans (Mn) oder des Titans (Ti) verwendet werden, wobei bevorzugt
   ○ eine Kombination aus Verbindungen des Aluminiums (Al), des Siliziums (Si) und des Mangans (Mn) verwendet wird, bevorzugt
   ○ in Mengen von 0,2 bis 1,0°% Al, 0 bis 1,0% Si und 0,05 bis 0,8% Mn (angegeben in Gewichtsprozent des Kations, bezogen auf das eingesetzte TiO₂-Grundmaterial), wobei
   ○ das Mangan bevorzugt zu mehr als 5% in der Oxidationsstufe +2, besonders bevorzugt zu mehr als 10% in der Oxidationsstufe +2 vorliegt
   ○ als organische Substanzen Polyglykole (beispielsweise Poylethylenglykole bzw. Polypropylenglykole oder auch Copolymere daraus), Carbonsäuren, Alkalisalze von Carbonsäuren, mehrwertige Alkohole (beispielsweise Trimethylolpropan, Trimethylolethan, Pentaerythrit oder Neopentylgykol), Silane, Siloxane und Siloxan-Derivate, Siliconöle, Alkalisalze von Polyphosphaten, Aminoalkohole, Salze von Poly(meth)acrylsäure oder Poly(meth)acrylatcopolymere (beispielsweise Natrium-, Kalium- oder Ammoniumpolyacrylate) oder deren Mischungen verwendet werden, bevorzugt
   ○ in Mengen von 0,01 bis 8 Gew.-%, besonders bevorzugt von 0,05 bis 4 Gew.-%, ganz besonders bevorzugt von 0,1 bis 1,5°Gew.-%.
- ein Verfahren zur Herstellung des TiO₂-Pigments;
- die Verwendung des TiO₂-Pigments;
- die Verwendung des TiO₂-Pigments zur Herstellung polymerer Werkstoffe;
- ein polymerer, mit Pigmenten mattierter Werkstoff;
- ein polymerer, mit Pigmenten mattierter Werkstoff, der einen oder mehrere Stoffe enthält ausgewählt aus der Gruppe: Polyester, Polytrimethylenterephthalat, Polylactid, Polyamide, Polyolefine, Polyacrylnitrile, Viskose oder Zelluloseacetat;
- ein polymerer, mit Pigmenten mattierter Werkstoff, der 0,02 bis 10 Gew.-%. des erfindungsgemäßen TiO₂-Pigments enthält;
- ein polymerer, mit Pigmenten mattierter Werkstoff, der auf dem Anwendungsgebiet Synthesefaser 0,02 bis 10, bevorzugt 0,1 bis 3, besonders bevorzugt 0,15 bis 0,4 Gew.-% oder 1,5 bis 2,7°Gew.-% des erfindungsgemäßen TiO₂-Pigments enthält;
- ein polymerer, mit Pigmenten mattierter Werkstoff, der auf dem Anwendungsgebiet Film oder Folie 0,02 bis 10, bevorzugt 0,1 bis 8, besonders bevorzugt 0,4 bis 5 Gew.-%. des erfindungsgemäßen TiO₂-Pigments enthält;
- ein Verfahren zur Herstellung des polymeren" mit Pigmenten mattierten Werkstoffes;
- ein Verfahren zur Herstellung des polymeren, mit Pigmenten mattierten Werkstoffes, wobei die Zugabe des erfindungsgemäßen TiO₂-Pigments vor, während und/oder nach der Polymerisationsreaktion erfolgen kann;
- ein Verfahren zur Herstellung des polymeren, mit Pigmenten mattierten Werkstoffes, wobei die Zugabe des erfindungsgemäßen TiO₂-Pigments als Masterbatch erfolgen kann;
- ein Verfahren zur Herstellung des polymeren, mit Pigmenten mattierten Werkstoffes, wobei die Zugabe des erfindungsgemäßen TiO₂-Pigments als leicht in der jeweiligen Polymerschmelze zu verteilende Präparation erfolgen kann;
- die Verwendung des polymeren, mit Pigmenten mattierten Werkstoffes zur Herstellung von Synthesefasern;
- die Verwendung des polymeren, mit Pigmenten mattierten Werkstoffes zur Herstellung von textilen Flächen;
- die Verwendung des polymeren, mit Pigmenten mattierten Werkstoffes zur Herstellung von Filmen und/oder Folien;
- die Verwendung des polymeren, mit Pigmenten mattierten Werkstoffes zur Herstellung von Formteilen.

## Patentansprüche

1. TiO₂-Pigment, **dadurch gekennzeichnet, dass** es In der Anatas-Modifiikation vorliegt und einen Extinktionswert im Bereich von 0,9 bis 1,2 aufweist und Antimonionen enthält, wobei die Extinktion mit dem Filter Hg 492 nm In einer 20 mm Küvette einer wässrigen TiO₂-Suspension mit einer Konzentration von 25 mg/l bestimmt wird.

2. TiO₂-Pigment gemäß Anspruch 1, **dadurch gekennzeichnet, dass** der Extinktionswert im Bereich von 0,95 bis 1,1, bevorzugt im Bereich von 1,0 bis 1,05 liegt.

3. TiO₂-Pigment gemäß Anspruch 1 oder 2, **dadurch gekennzeichnet, dass** der Gehalt an Antimonionen 0,05 bis 1 Gew,-%, bevorzugt 0,1 bis 0,5 Gew.-%, besonders bevorzugt 0,25 bis 0,4 Gew.-% beträgt.

4. TiO₂-Pigment gemäß einem oder mehreren der Ansprüche 1 bis 3, **dadurch gekennzeichnet, dass** die Antimonionen zu mindestens 50%, bevorzugt zu mehr als 70%, besonders bevorzugt zu mehr als 90% in der fünfwertigen Oxidationsstufe vorliegen.

5. TiO₂-Pigment gemäß einem oder mehreren der Ansprüche 1 bis 4 **dadurch gekennzeichnet, dass** es zusätzlich einer Oberflächenbehandlung unterzogen wurde.

6. TiO₂-Pigment gemäß einem oder mehreren der Ansprüche 1 bis 5, **dadurch gekennzeichnet, dass** es mit einer Schicht oder mehreren Schichten anorganischer und/oder organischer Substanzen belegt ist.

7. TiO₂-Pigment gemäß einem oder mehreren der Ansprüche 1 bis 6, **dadurch gekennzeichnet, dass** als anorganische Substanzen Verbindungen des Aluminiums (Al), des Siliziums (Si), des Zirkons (Zr), des Mangans (Mn) und/oder des Titans (Ti) verwendet werden.

8. TiO₂-Pigment gemäß einem oder mehreren der Ansprüche 1 bis 7, **dadurch gekennzeichnet, dass** eine Kombination aus Verbindungen des Aluminiums (Al), des Siliziums (Si) und des Mangans (Mn) verwendet wird.

9. TiO₂-Pigment gemäß einem oder mehreren der Ansprüche 1 bis 8, **dadurch gekennzeichnet, dass** Mengen von 0,2 bis 1,0% Al, 0 bis 1,0% Si und 0,05 bis 0,8% Mn (angegeben in Gewichtsprozent des Kations, bezogen auf das eingesetzte TiO₂-Grundmaterial) verwendet werden.

10. TiO₂-Pigment gemäß einem oder mehreren der Ansprüche 1 bis 9, **dadurch gekennzeichnet, dass** das Mangan bevorzugt zu mehr als 5% in der Oxidationsstufe +2, besonders bevorzugt zu mehr als 10% in der Oxidationsstufe +2 vorliegt.

11. TiO₂-Pigment gemäß einem oder mehreren der Ansprüche 1 bis 10, **dadurch gekennzeichnet, dass** es mit einer Schicht oder mehreren Schichten organischer Substanzen belegt sind.

12. TiO₂-Pigment gemäß einem oder mehreren der Ansprüche 1 bis 11, **dadurch gekennzeichnet, dass** als organische Substanzen Polyglykole (beispielsweise Poylethylenglykole bzw. Polypropylenglykole oder auch Copolymere daraus), Carbonsäuren, Alkalisalze von Carbonsäuren, mehrwertige Alkohole (beispielsweise Trimethylolpropan, Trimethyfolethan, Pentaerythrit oder Neopentylgykol), Silane, Siloxane und Siloxan-Derivate, Siliconöle, Alkalisalze von Polyphosphaten, Aminoalkohole, Salze von Poly(meth)acrylsäure oder Poly(meth)acrylatcopolymere (beispielswelse Natrium-, Kalium- oder Ammoniumpolyacrylate) oder deren Mischungen verwendet werden.

13. TiO₂-Pigment gemäß einem oder mehreren der Ansprüche 1 bis 12, **dadurch gekennzeichnet, dass** die organischen Substanzen in Mengen von 0,01 bis 8 Gew.-%, besonders bevorzugt von 0,05 bis 4 Gew.-%, ganz besonders bevorzugt von 0,1 bis 1,5°Gew.-% eingesetzt werden.

14. Verfahren zur Herstellung eines TiO₂-Pigments gemäß einem oder mehreren der Ansprüche 1 bis 13, **dadurch gekennzeichnet,**
a) **dass** ein TiO₂. in der Anatas-Modifikation durch den Anteil an Feinstpartikeln Im TiO₂ auf Grund von höherer Remission im kurzwelligen sichtbaren Bereich die Extinktion eingestellt wird, wobei dieses durch den Kristallwachstumsprozess (die Verfahrensschritte Hydrolyse, Glühsalzbehandlung und/oder Kalzination), die Mahlung (Trocken- oder Nassmahlung) und/oder die Klassierung (Siebung und/oder Sichtung) vorgenommen wird,
b) **dass** Antimonionen zugegeben werden und
c) **dass** das TiO₂-Pigment oberflächenbehandelt wird.

15. Verfahren zur Herstellung eines TiO₂-Pigments gemäß Anspruch 14, **dadurch gekennzeichnet, dass** in Stufe c) eine wässrige Dispersion eines aufgemahlenen TiO₂-Materials vorgelegt und die aufzufällende Verbindung in zunächst gelöster Form zugegeben wird und dass dann durch gezielte Änderung des pH-Wertes, beispielsweise durch Zugabe von Natronlauge, Schwefelsäure oder Phosphorsäure, die gewünschte Substanz aufgefällt wird.

16. Verfahren zur Herstellung eines TiO₂-Pigments gemäß Anspruch 14 oder 15, **dadurch gekennzeichnet, dass** die TiO₂-Partikel mit einer Schicht oder mehreren Schichten anorganischer und/oder organischer Substanzen belegt werden.

17. Verfahren zur Herstellung eines TiO₂-Pigments gemäß einem oder mehreren der Ansprüche 14 bis 16, **dadurch gekennzeichnet, dass** die Schichten nacheinander oder gleichzeitig erzeugt werden.

18. Verfahren zur Herstellung eines TiO₂-Pigments gemäß einem oder mehreren der Ansprüche 14 bis 17, **dadurch gekennzeichnet, dass** die organischen Oberflächenbehandlungsmittel nach der Kalzination zugegeben werden.

19. Verfahren zur Herstellung eines TiO₂-Pigments gemäß einem oder mehreren der Ansprüche 14 bis 17, **dadurch gekennzeichnet, dass** die organischen Oberflächenbehandlungsmittel nach Aufbringung der anorganischen Oberflächenbehandlungsmittel zugegeben werden.

20. Verwendung eines TiO₂-Pigments gemäß einem oder mehreren der Ansprüche 1 bis 13 zur Herstellung polymerer Werkstoffe.

21. Polymerer, mit Pigmenten mattierter Werkstoff, **dadurch gekennzeichnet, dass** er einen oder mehrere Stoffe, ausgewählt aus den Gruppen Polyester, Polytrimethylenterephthalat, Polylactid, Polyamide, Polyolefine, Polyacrylnitrile, Viskose und/oder Zelluloseacetat und ein TiO₂-Pigment gemäß einem oder mehreren der Ansprüche 1 bis 13 enthält.

22. Polymerer, mit Pigmenten mattierter Werkstoff gemäß Anspruch 21, **dadurch gekennzeichnet, dass** er 0,02 bis 10 Gew.-% des TiO₂-Pigments enthält.

23. Polymerer, mit Pigmenten mattierter Werkstoff gemäß Anspruch 21 oder 22, **dadurch gekennzeichnet, dass** er auf dem Anwendungsgebiet Synthesefaser 0,02 bis 10, bevorzugt 0,1 bis 3, besonders bevorzugt 0,15 bis 0,4 Gew.-% des TiO₂-Pigments enthält.

24. Polymerer, mit Pigmenten mattlerter Werkstoff gemäß Anspruch 23, **dadurch gekennzeichnet, dass** er 1,5 bis 2,7°Gew.-% des TiO₂-Pigments enthält.

25. Polymerer, mit Pigmenten mattierter Werkstoff gemäß Anspruch 21 oder 22, **dadurch gekennzeichnet, dass** er auf dem Anwendungsgebiet polymerer Film oder Folie 0,02 bis 10, bevorzugt 0,1 bis 8, besonders bevorzugt 0,4 bis 5 Gew.-% des TiO₂-Pigments enthält.

26. Verfahren zur Herstellung des polymeren, mit Pigmenten mattierten Werkstoffs gemäß einem oder mehreren der Ansprüche 21 bis 25, **dadurch gekennzeichnet, dass** in einem an sich bekannten Verfahren zur Herstellung von polymeren, mit Pigmenten mattierten Werkstoffen die Zugabe des TiO₂-Pigments gemäß einem oder mehreren der Ansprüche 1 bis 13 vor, während und/oder nach der Polymerisationsreaktion erfolgt.

27. Verfahren zur Herstellung des polymeren, mit Pigmenten mattierten Werkstoffs gemäß Anspruch 26, **dadurch gekennzeichnet, dass** die Zugabe des TiO₂-Pigments als Masterbatch erfolgt.

28. Verwendung des polymeren, mit Pigmenten mattierten Werkstoffs gemäß einem oder mehreren der Ansprüche 21 bis 25 zur Herstellung von Synthesefasern.

29. Verwendung des polymeren, mit Pigmenten mattierten Werkstoffs gemäß einem oder mehreren der Ansprüche 21 bis 25 zur Herstellung von textilen Flächen.

30. Verwendung des polymeren, mit Pigmenten mattierten Werkstoffs gemäß einem oder mehreren der Ansprüche 21 bis 25 zur Herstellung von Filmen und/oder Follen.

31. Verwendung des polymeren, mit Pigmenten mattierten Werkstoffs gemäß einem oder mehreren der Ansprüche 21 bis 25 zur Herstellung von Formteilen.

## Claims

1. TiO₂ pigment, **characterised in that** it is present in the anatase modification and exhibits an extinction value within the range from 0.9 to 1.2 and contains antimony ions, wherein the extinction is determined with the filter Hg 492 nm in a 20 mm cell of an aqueous TiO₂. suspension with a concentration of 25 mg/l.

2. TiO₂ pigment according to Claim 1, **characterised in that** the extinction value lies within the range from 0.95 to 1.1, preferably within the range from 1.0 to 1.05.

3. TiO₂ pigment according to Claim 1 or 2, **characterised in that** the content of antimony ions amounts to 0.05 wt.% to 1 wt.%, preferably 0.1 wt.% to 0.5 wt.%, particularly preferably 0.25 wt.% to 0.4 wt.%.

4. TiO₂ pigment according to one or more of Claims 1 to 3, **characterised in that** the antimony ions are present in the pentavalent oxidation state in a proportion amounting to at least 50%, preferably more than 70%, particularly preferably more than 90 %.

5. TiO₂ pigment according to one or more of Claims 1 to 4, **characterised in that** it has additionally been subjected to a surface treatment.

6. TiO₂ pigment according to one or more of Claims 1 to 5, **characterised in that** it has been coated with a layer or with several layers of inorganic and/or organic substances.

7. TiO₂ pigment according to one or more of Claims 1 to 6, **characterised in that** use is made of compounds of aluminium (Al), of silicon (Si), of zirconium (Zr), of manganese (Mn) and/or of titanium (Ti) by way of inorganic substances.

8. TiO₂ pigment according to one or more of Claims 1 to 7, **characterised in that** use is made of a combination of compounds of aluminium (Al), of silicon (Si) and of manganese (Mn).

9. TiO₂ pigment according to one or more of Claims 1 to 8, **characterised in that** use is made of quantities from 0.2 to 1.0 % Al, 0% to 1.0 % Si and 0.05% to 0.8 % Mn (specified in percentage by weight of the cation, relative to the TiO₂ base material employed).

10. TiO₂ pigment according to one or more of Claims 1 to 9, **characterised in that** the manganese is preferably present in a proportion amounting to more than 5 % in the +2 oxidation state, particularly preferably in a proportion amounting to more than 10 % in the +2 oxidation state.

11. TiO₂ pigment according to one or more of Claims 1 to 10, **characterised in that** it has been coated with a layer or with several layers of organic substances.

12. TiO₂ pigment according to one or more of Claims 1 to 11, **characterised in that** use is made of polyglycols (for example, polyethylene glycols or polypropylene glycols or even copolymers formed therefrom), carboxylic acids, alkali salts of carboxylic acids, polyhydric alcohols (for example, trimethylolpropane, trimethylolethane, pentaerythritol or neopentyl glycol), silanes, siloxanes and siloxane derivatives, silicone oils, alkali salts of polyphosphates, amino alcohols, salts of poly(meth)acrylic acid or poly(meth)acrylate copolymers (for example, sodium polyacrylates, potassium polyacrylates or ammonium polyacrylates) or mixtures thereof by way of organic substances.

13. TiO₂ pigment according to one or more of Claims 1 to 12, **characterised in that** the organic substances are employed in quantities from 0.01 wt.% to 8 wt.%, particularly preferably from 0.05 wt.% to 4 wt. %, quite particularly preferably from 0.1 wt.% to 1.5 wt.%.

14. Process for producing a TiO₂ pigment according to one or more of Claims 1 to 13, **characterised in that**
a) a TiO₂ in the anatase modification has its extinction adjusted by the proportion of ultrafine particles in the TiO₂ by reason of higher reflectance in the short-wave visible region, wherein this is effected by the crystal-growth process (the process steps constituted by hydrolysis, incandescent-salt treatment and/or calcination), the grinding (dry grinding or wet grinding) and/or the size grading (screening and/or sifting),
b) antimony ions are added and
c) the TiO₂ pigment is surface-treated.

15. Process for producing a TiO₂ pigment according to Claim 14, **characterised in that** in stage c) an aqueous dispersion of a ground TiO₂ material is submitted, and the compound to be precipitated is added in initially dissolved form, and **in that** by purposeful alteration of the pH value - for example, by addition of caustic-soda solution, sulfuric acid or phosphoric acid - the desired substance is then precipitated.

16. Process for producing a TiO₂ pigment according to Claim 14 or 15, **characterised in that** the TiO₂ particles are coated with a layer or with several layers of inorganic and/or organic substances.

17. Process for producing a TiO₂ pigment according to one or more of Claims 14 to 16, **characterised in that** the layers are generated in succession or simultaneously.

18. Process for producing a TiO₂ pigment according to one or more of Claims 14 to 17, **characterised in that** the organic surface-treatment agents are added after the calcination.

19. Process for producing a TiO₂ pigment according to one or more of Claims 14 to 17, **characterised in that** the organic surface-treatment agents are added after application of the inorganic surface-treatment agents.

20. Use of a TiO₂ pigment according to one or more of Claims 1 to 13 for the manufacture of polymeric materials.

21. Polymeric material delustred with pigments, **characterised in that** it contains one or more substances selected from the groups comprising polyesters, polytrimethylene terephthalate, polylactide, polyamides, polyolefins, polyacrylonitriles, viscose and/or cellulose acetate and a TiO₂ pigment according to one or more of Claims 1 to 13.

22. polymeric material delustred with pigments according to Claim 21, **characterised in that** it contains 0.02 wt.% to 10 wt.% of the TiO₂ pigment.

23. Polymeric material delustred with pigments according to Claim 21 or 22, **characterised in that** in the field of application constituted by synthetic fibre it contains 0.02 wt.% to 10 wt.%, preferably 0.1 wt.% to 3 wt.%, particularly preferably 0.15 wt.% to 0.4 wt.%, of the TiO₂ pigment.

24. Polymeric material delustred with pigments according to Claim 23, **characterised in that** it contains 1.5 wt.% to 2.7 wt.% of the TiO₂ pigment.

25. polymeric material delustred with pigments according to Claim 21 or 22, **characterised in that** in the field of application constituted by polymeric film or sheet it contains 0.02 wt.% to 10 wt.%, preferably 0.1 wt.% to 8 wt.%, particularly preferably 0.4 wt.% to 5 wt.%, of the TiO₂ pigment.

26. Process for producing the polymeric material delustred with pigments according to one or more of Claims 21 to 25, **characterised in that** in a process known as such for producing polymeric materials delustred with pigments the addition of the TiO₂ pigment according to one or more of Claims 1 to 13 is effected before, during and/or after the polymerisation reaction.

27. Process for producing the polymeric material delustred with pigments according to Claim 26, **characterised in that** the addition of the TiO₂ pigment is effected in the form of a master batch.

28. Use of the polymeric material delustred with pigments according to one or more of Claims 21 to 25 for the purpose of producing synthetic fibres.

29. Use of the polymeric material delustred with pigments according to one or more of Claims 21 to 25 for the purpose of producing textile fabrics.

30. Use of the polymeric material delustred with pigments according to one or more of Claims 21 to 25 for the purpose of producing films and/or sheets.

31. Use of the polymeric material delustred with pigments according to one or more of Claims 21 to 25 for the purpose of producing mouldings.

## Revendications

1. Pigment de dioxyde de titane TiO₂, **caractérisé en ce qu'**il se présente sous la forme anatase, présente une extinction située dans l'intervalle allant de 0,9 à 1,2 et contient des ions antimoine, laquelle extinction est déterminée pour une suspension aqueuse de TiO₂ présentant une concentration de 25 mg/L, dans une cuvette de 20 mm et avec un filtre pour la longueur d'onde du mercure de 492 nm.

2. Pigment de TiO₂, conforme à la revendication 1, **caractérisé en ce qu'**il présente une extinction située dans l'intervalle allant de 0,95 à 1,1, et de préférence dans l'intervalle allant de 1,0 à 1,05.

3. Pigment de TiO₂, conforme à la revendication 1 ou 2, **caractérisé en ce que** sa teneur en ions antimoine vaut de 0,05 à 1 % en poids, de préférence de 0,1 à 0,5 % en poids et en particulier de 0,25 à 0,4 % en poids.

4. Pigment de TiO₂, conforme à l'une ou plusieurs des revendications 1 à 3, **caractérisé en ce qu'**au moins 50 %, de préférence plus de 70 % et en particulier plus de 90 % des ions antimoine se trouvent dans l'état d'oxydation pentavalent.

5. Pigment de TiO₂, conforme à l'une ou plusieurs des revendications 1 à 4, **caractérisé en ce qu'**il a subi en outre un traitement de surface.

6. Pigment de TiO₂, conforme à l'une ou plusieurs des revendications 1 à 5, **caractérisé en ce qu'**il est revêtu d'une couche ou de plusieurs couches de substances inorganiques et/ou organiques.

7. Pigment de TiO₂, conforme à l'une ou plusieurs des revendications 1 à 6, **caractérisé en ce que** sont utilisées, en tant que substances inorganiques, des composés de l'aluminium (Al), du silicium (Si), du zirconium (Zr), du manganèse (Mn) et/ou du titane (Ti).

8. Pigment de TiO₂, conforme à l'une ou plusieurs des revendications 1 à 7, **caractérisé en ce qu'**est utilisée une combinaison de composes de l'aluminium (Al), du silicium (Si) et du manganèse (Mn).

9. Pigment de TiO₂, conforme à l'une ou plusieurs des revendications 1 à 8, **caractérisé en ce que** sont utilisées des quantités de 0,2 à 1,0 % d'aluminium (Al), de 0 à 1,0 % de silicium (Si) et de 0,05 à 0,8 % de manganèse (Mn), quantités données en pourcentages en poids rapportés au poids de matériau de base TiO₂ utilisé.

10. Pigment de TiO₂, conforme à l'une ou plusieurs des revendications 1 à 9, **caractérisé en ce que** de préférence plus de 5 % du manganèse se trouve au degré d'oxydation +2, et en particulier plus de 10 % du manganèse se trouve au degré d'oxydation +2.

11. Pigment de TiO₂, conforme à l'une ou plusieurs des revendications 1 à 10, **caractérisé en ce qu'**il est revêtu d'une couche ou de plusieurs couches de substances organiques.

12. Pigment de TiO₂, conforme à l'une ou plusieurs des revendications 1 à 11, **caractérisé en ce que** sont utilisés, en tant que substances organiques, des polyglycols (par exemple des polyéthylèneglycols, des polypropylèneglycols ou de leurs copolymères), des acides carboxyliques, des sels de métal alcalin d'acide carboxylique, des polyols (par exemple du triméthylolpropane, du triméthyloléthane, du pentaérythritol ou du néopentylglycol), des silanes, des siloxanes et des dérivés de siloxane, des huiles de silicone, des sels polyphosphates de métal alcalin, des amino-alcools, des sels de poly(acide acrylique) ou de poly(acide méthacrylique) ou des copolymères polyacrylates ou polyméthacrylates (par exemple des polyacrylates de sodium, de potassium ou d'ammonium) ou des mélanges de telles substances.

13. Pigment de TiO₂, conforme à l'une ou plusieurs des revendications 1 à 12, **caractérisé en ce que** des substances organiques sont utilisées en une proportion de 0,01 à 8 % en poids, de préférence de 0,05 à 4 % en poids et en particulier de 0,1 à 1,5 % en poids.

14. Procédé de préparation d'un pigment de TiO₂ conforme à l'une ou plusieurs des revendications 1 à 13, **caractérisé en ce que** :
a) l'on ajuste l'extinction d'un dioxyde de titane TiO₂ sous forme anatase au moyen de la fraction de très fines particules de TiO₂, en raison de leur plus forte réémission dans le domaine des courtes longueurs d'onde visibles, ceci étant réalisé par le processus de croissance cristalline (avec les étapes d'hydrolyse, de traitement par un sel à recuit et/ou de calcination), le broyage (broyage à sec ou au mouillé), et/ou la classification (tamisage et/ou criblage) ;
b) l'on ajoute des ions antimoine ;
c) et l'on soumet le pigment de TiO₂ à un traitement de surface.

15. Procédé de préparation d'un pigment de TiO₂, conforme à la revendication 14, **caractérisé en ce que**, dans l'étape (c), on prépare une dispersion aqueuse du matériau TiO₂ broyé et l'on ajoute à l'état dissous le composé à faire précipiter, et **en ce qu'**on fait ensuite précipiter la substance voulue, en modifiant le pH de manière ciblée, par exemple par addition de lessive de soude, d'acide sulfurique ou d'acide phosphorique.

16. Procédé de préparation d'un pigment de TiO₂, conforme à la revendication 14 ou 15, **caractérisé en ce qu'**on revêt les particules de TiO₂ d'une couche ou de plusieurs couches de substances inorganiques et/ou organiques.

17. Procédé de préparation d'un pigment de TiO₂, conforme à l'une ou plusieurs des revendications 14 à 16, **caractérisé en ce que** les couches sont formées successivement ou simultanément.

18. Procédé de préparation d'un pigment de TiO₂, conforme à l'une ou plusieurs des revendications 14 à 17, **caractérisé en ce que** les agents organiques de traitement de surface sont ajoutés après la calcination.

19. Procédé de préparation d'un pigment de TiO₂, conforme à l'une ou plusieurs des revendications 14 à 17, **caractérisé en ce que** les agents organiques de traitement de surface sont ajoutés après le dépôt des agents inorganiques de traitement de surface.

20. Utilisation d'un pigment de TiO₂ conforme à l'une ou plusieurs des revendications 1 à 13 pour la production de matériaux polymères.

21. Matériau polymère rendu mat à l'aide d'un pigment, **caractérisé en ce qu'**il comprend une ou plusieurs matières choisie(s) dans l'ensemble formé par les polyesters, poly(triméthylène tétéphtalate), polylactides, polyamides, polyoléfines, polyacrylonitrile, viscose et/ou acétate de cellulose, et un pigment de TiO₂ conforme à l'une ou plusieurs des revendications 1 à 13.

22. Matériau polymère rendu mat à l'aide d'un pigment, conforme à la revendication 21, **caractérisé en ce qu'**il contient de 0,02 à 10 % en poids de pigment de TiO₂.

23. Matériau polymère rendu mat à l'aide d'un pigment, conforme à la revendication 21 ou 22, **caractérisé en ce que**, dans le domaine d'application des fibres de synthèse, il contient de 0,02 à 10 % en poids, de préférence de 0,1 à 3 % en poids et en particulier de 0,15 à 0,4 % en poids de pigment de TiO₂.

24. Matériau polymère rendu mat à l'aide d'un pigment, conforme à la revendication 23, **caractérisé en ce qu'**il contient de 1,5 à 2,7 % en poids de pigment de TiO₂.

25. Matériau polymère rendu mat à l'aide d'un pigment, conforme à la revendication 21 ou 22, **caractérisé en ce que**, dans le domaine d'application des films ou feuilles en polymère, il contient de 0,02 à 10 % en poids, de préférence de 0,1 à 8 % en poids et en particulier de 0,4 à 5 % en poids de pigment de TiO₂.

26. Procédé de fabrication d'un matériau polymère rendu mat à l'aide d'un pigment, conforme à l'une ou plusieurs des revendications 21 à 25, **caractérisé en ce que**, dans un procédé connu de fabrication de matériaux polymères rendus mats à l'aide d'un pigment, l'on ajoute, avant et/ou pendant et/ou après la réaction de polymérisation, un pigment de TiO₂ conforme à l'une ou plusieurs des revendications 1 à 13.

27. Procédé de fabrication d'un matériau polymère rendu mat à l'aide d'un pigment, conforme à la revendication 26, **caractérisé en ce qu'**on ajoute le pigment de TiO₂ sous forme de mélange-maître.

28. Utilisation d'un matériau polymère rendu mat à l'aide d'un pigment, conforme à l'une ou plusieurs des revendications 21 à 25, pour la fabrication de fibres de synthèse.

29. Utilisation d'un matériau polymère rendu mat à l'aide d'un pigment, conforme à l'une ou plusieurs des revendications 21 à 25, pour la fabrication de produits textiles plats.

30. Utilisation d'un matériau polymère rendu mat à l'aide d'un pigment, conforme à l'une ou plusieurs des revendications 21 à 25, pour la fabrication de films et/ou de feuilles.

31. Utilisation d'un matériau polymère rendu mat à l'aide d'un pigment, conforme à l'une ou plusieurs des revendications 21 à 25, pour la fabrication de pièces façonnées.
